# FASCICULE DE BREVET EUROPEEN

(11) **EP 2 433 271 B1**
(45) Date de publication et mention de la délivrance du brevet: **30.08.2017**
(21) Numéro de dépôt: 10718496.2
(22) Date de dépôt: 06.05.2010
(51) Int. Cl.: G09F 3/00, A01K 11/00

(54) **LIEN D'IDENTIFICATION AVEC DEUX VERROUS**
IDENTIFIKATIONSBAND MIT ZWEI VERSCHLÜSSEN
IDENTIFICATION STRAP WITH TWO LOCKS

(30) Priorité: 19.05.2009 FR 0953342
(43) Date de publication de la demande: 28.03.2012
(73) Titulaire: A. RAYMOND et Cie, 38000 Grenoble (FR)
(72) Inventeur: GIRAUD, Sylvain, 38130 Echirolles (FR)
(74) Mandataire: Grünecker Patent- und Rechtsanwälte PartG mbB
(86) Numéro de dépôt international: PCT/EP2010/002766
(87) Numéro de publication internationale: WO 2010/133296

(56) Documents cités:
- CH-A5- 667 773
- FR-A- 2 913 315

## Description

L'invention concerne un lien comprenant une bande ayant deux extrémités munies respectivement d'une partie mâle et d'une partie femelle d'un premier organe de fermeture destinées à s'insérer l'une dans l'autre pour relier entre elles les deux extrémités de la bande afin de refermer le lien.

L'invention s'applique plus particulièrement aux liens d'identification pour les animaux, notamment du gibier. Un tel lien d'identification peut par exemple être rendu obligatoire pour identifier et contrôler les animaux abattus pendant la période de chasse. Dans ce cas, le lien est destiné à être mis en place sur un membre de l'animal abattu, par exemple à travers un trou formé à l'aide d'un coup de couteau dans un endroit prédéterminé d'une patte de l'animal, de façon à baguer l'animal. La fermeture du lien sur la patte de l'animal se fait en rapprochant les deux extrémités du lien puis en insérant la partie mâle de l'organe de fermeture dans la partie femelle. On comprend que pour éviter la fraude, il est impératif que le lien soit conçu pour ne pas pouvoir être facilement démonté et reposé ensuite par exemple sur un autre animal de manière frauduleuse, ou qu'en cas de démontage et remontage d'un lien, il existe un témoin sur le lien indicatif de cette opération de démontage et remontage.

On rencontre des exigences analogues pour une utilisation du lien en vue de sceller des objets tels qu'un coffret ou un emballage ou tout dispositif de conservation.

On connaît du document de brevet EP-11611784 un lien d'identification analogue à celui décrit ci-dessus dans lequel le premier organe de fermeture comprend deux lames disposées dans un logement formant la partie femelle et un plot doté de crans formant la partie mâle. Une fois le plot enclenché dans le logement, il est impossible de le ressortir sans détériorer le lien. La fiabilité de ce lien est augmentée par la présence de part et d'autre du plot de deux ailes agencées pour prendre place entre les deux lames, ce qui empêche tout mouvement de rotation et limite ainsi l'usure du plot et du logement. Toutefois, la fabrication de ce lien nécessite un moule comprenant deux plaques et deux noyaux intérieurs dont la cinématique d'assemblage est complexe, ce qui induit un surcoût de fabrication important.

On connaît aussi du document de brevet CH-667 773 un lien d'identification comprenant autour de la partie mâle quatre bossages destinés à pénétrer quatre rainures associées formées dans la partie femelle pour empêcher la rotation des parties mâle et femelle l'une par rapport à l'autre, et donc augmenter la fiabilité du lien. Cependant, la bande du lien est réalisée en matière plastique dans laquelle sont moulées les parties mâle et femelle lesquelles sont réalisées en métal, ce qui constitue un assemblage bi-matière complexe et coûteux à réaliser.

Le but de l'invention est de proposer un autre lien et en particulier un lien d'identification pour des animaux, qui soit peu coûteux et simple à fabriquer tout en présentant une protection renforcée contre le démontage.

A cet effet, l'invention a pour objet un lien selon la revendication 1. Le lien selon l'invention est donc un lien à deux verrous agencés l'un par rapport à l'autre de telle façon qu'un des deux verrous empêche l'accès à l'autre verrou quand le lien est refermé sur lui-même. Ces deux verrous contribuent à renforcer la protection du lien contre le démontage et donc contre la fraude.

Un lien selon l'invention peut présenter avantageusement les particularités suivantes :
- les premier et second organes de fermeture étant agencés pour se verrouiller simultanément ;
- le premier organe de fermeture comporte des crans flexibles selon une certaine direction et le second organe de fermeture comprend des crans flexibles selon une autre direction perpendiculaire à ladite certaine direction ;
- la partie mâle du premier organe de fermeture avec la partie femelle du second organe de fermeture forment un premier ensemble de fermeture disposé à une extrémité de la bande et la partie mâle du second organe de fermeture avec la partie femelle du premier organe de fermeture forment un second ensemble de fermeture disposé à l'autre extrémité de la bande ;
- il peut être prévu avantageusement à chaque extrémité de la bande un moyen pour empêcher une insertion complète de la partie mâle dans la partie femelle correspondante des organe de fermeture quand le lien est refermé sur lui-même ; ce moyen peut comporter une languette qui est reliée à la bande par une zone de matière sécable ;
- il peut être prévu avantageusement un moyen pour maintenir le lien refermé sur lui-même selon une position de transport selon laquelle les parties mâle et femelle des organes de fermeture ne sont pas insérées l'une dans l'autre ;
- un dispositif de marquage du type imprimé sur une face de la bande, ou encore soudé ou surmoulé dans la bande peut encore être prévu pour servir à l'identification de l'animal bagué avec le lien par exemple ;
- la bande avec les organes de fermetures peuvent avantageusement être d'une seule pièce réalisée par moulage d'une matière plastique.

Les avantages et les caractéristiques du lien d'identification selon l'invention, ressortiront plus clairement de la description qui suit et qui se rapporte au dessin annexé qui en représente un mode de réalisation non limitatif.
La figure 1 est une vue en perspective du lien d'identification selon l'invention.
La figure 2 est une vue en perspective en coupe selon l'axe II-II de la figure 1 d'une extrémité du lien d'identification selon l'invention.
La figure 3 est une vue en perspective en coupe selon l'axe III-III de la figure 1 de l'autre extrémité du lien d'identification selon l'invention.

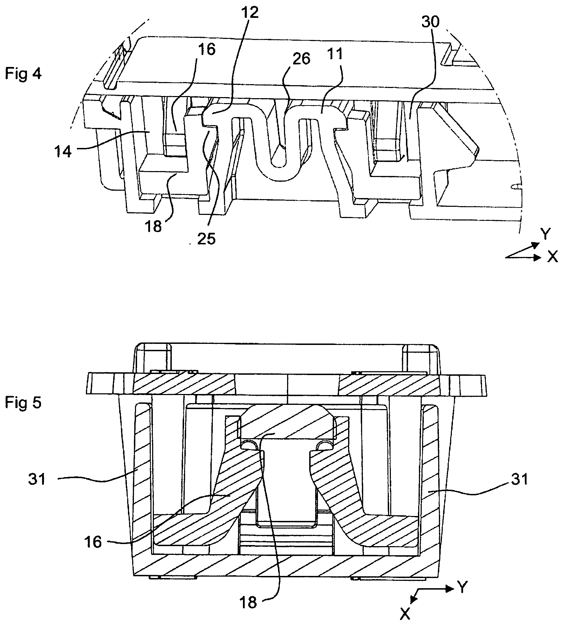

La figure 4 est une vue en perspective en coupe selon l'axe III-III de la figure 1 du lien d'identification selon l'invention en position fermée avec les premier et second organes de fermeture enclenchés l'un dans l'autre.
La figure 5 est une vue en perspective en coupe selon l'axe V-V de la figure 1 du lien d'identification selon l'invention en position fermée avec les premier et second organes de fermeture enclenchés l'un dans l'autre.
La figure 6 est une vue de côté du lien d'identification selon l'invention dans une position d'anti-verrouillage.
La figure 7 est une vue de côté du lien d'identification selon l'invention dans une position de transport.
La figure 8 représente le lien d'identification selon l'invention en perspective, vue de l'autre face par rapport à la figure 1.

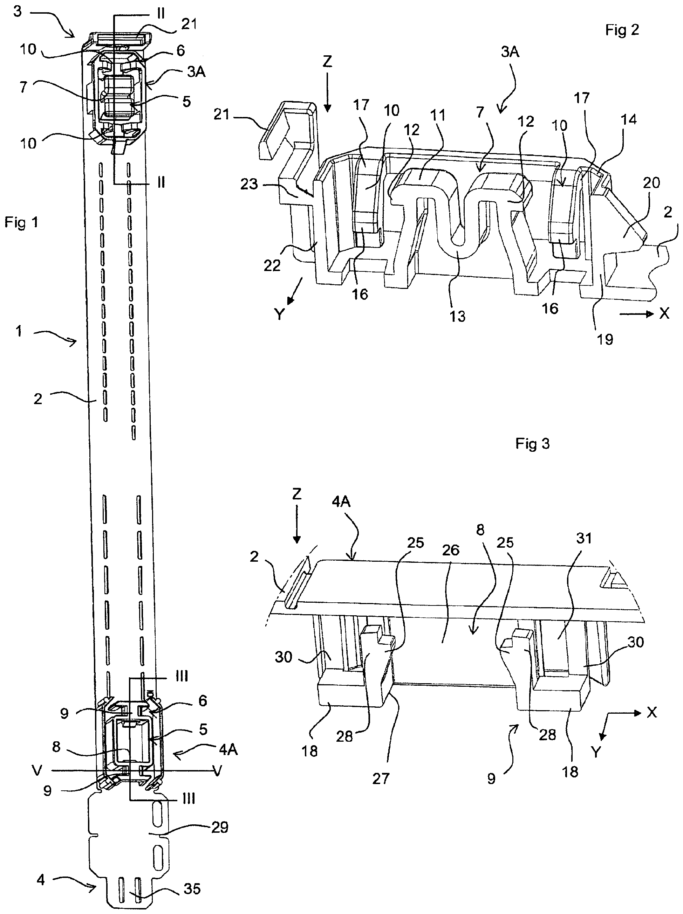

Sur la figure 1, on a représenté un lien d'identification 1 pour l'identification d'animaux selon l'invention, comprenant une bande 2 souple ici en matière plastique, par exemple de section transversale sensiblement rectangulaire et de fine épaisseur, qui s'étend selon une direction longitudinale X entre deux parties d'extrémités opposées 3,4 sur lesquelles sont disposées deux organes de fermeture 5,6 du lien aptes à relier les deux parties d'extrémité entre elles de la bande afin de refermer et verrouiller le lien 1.

Les deux organes de fermeture 5,6 sont ici disposés sur une même face de la bande 2 de sorte que le lien se referme sur lui-même par un pliage à plat.

Le premier organe de fermeture 5 comprend une partie mâle 7 et une partie femelle 8 agencées pour s'insérer l'une dans l'autre dans le sens de la direction Z (c'est-à-dire sensiblement perpendiculaire à la bande 2) quand les deux extrémités 3 et 4 sont rapprochées l'une de l'autre face à face.

Le second organe de fermeture 6 comprend aussi une partie mâle 9 et une partie femelle 10 agencées pour s'insérer l'une dans l'autre dans le sens de la direction Z quand les parties 7 et 8 de l'organe de fermeture 5 sont également insérées l'une dans l'autre.

La partie mâle 7 du premier organe de fermeture 5 et la partie femelle 10 du second organe de fermeture 6 sont ici disposées sur une même extrémité 3 de la bande 2 et forment un premier ensemble de fermeture 3A, tandis que la partie femelle 8 du premier organe de fermeture 5 et la partie mâle 9 du second organe de fermeture 6 sont disposées sur l'autre extrémité 4 de la bande 2 et forment un second ensemble de fermeture 4A.

On comprend donc que ces deux ensembles de fermeture 3A et 4A coopèrent mutuellement en même temps pour refermer le lien. Comme visible sur la figure 1, la partie femelle 10 entoure ici la partie mâle 7 et la partie mâle 9 entoure ici la partie femelle 8. Globalement donc, le second organe de fermeture 6 entoure le premier organe de fermeture 5 quand le lien est refermé sur lui-même.

Dans la suite de la description, il faut considérer la direction X comme un axe de symétrie miroir du lien selon l'invention.

Sur la figure 2, on a représenté le premier ensemble de fermeture 3A qui comprend la partie mâle 7 et la partie femelle 10. La partie mâle 7 est un plot 11 en forme de champignon dont la tête sensiblement parallélépipédique forme deux crans 12 rigides de verrouillage qui s'étendent ici dans une direction Y perpendiculaire à la direction X et est pourvue d'une rainure 13 centrale profonde qui s'étend aussi dans la direction Y. La rainure 13 a essentiellement un rôle d'aide au démoulage du lien lors de sa fabrication. La base du plot 11 est constituée par la bande 2 elle-même.

La partie femelle 10 est un cadre 14 qui entoure le plot 11 et qui a deux côtés latéraux opposés 15 munis de crans 16 flexibles selon la direction Y. Chaque cran 16 est en fait monté sur une patte flexible 17 au niveau d'un côté 15 du cadre 14.

Sur la figure 3, on a représenté le second ensemble de fermeture 4A qui comprend la partie femelle 8 et la partie mâle 9. La partie femelle 8 comprend des crans 25 flexibles selon la direction longitudinale X aptes à s'enclencher dans les crans rigides 12 de la partie mâle 7. Ces crans 25 sont ici disposés sur deux parois 27 latérales opposées du cadre 26. Chaque cran 25 fait partie plus particulièrement d'une patte flexible 28 suspendue au cadre 26. La partie mâle 9 entoure ici la partie femelle 8. Plus particulièrement, du côté extérieur des parois latérales 27, s'étendent dans la direction longitudinale X deux crans rigides 18 en surélévation par rapport à la bande 2. Chaque cran 18 forme une sorte de pont ou d'arceau 30 solidaire de la bande 2.

Comme on peut le voir sur la figure 3, il est prévu deux parois 31 pleines bordant selon la direction X les crans 18 du second organe de fermeture 6 pour empêcher un accès à ceux-ci quand le lien est refermé sur lui-même.

Pour refermer et verrouiller le lien 1, il suffit de le plier au centre de la bande 2 par exemple en rapprochant l'un vers l'autre les deux ensembles de fermeture 3A,4A puis en les engageant l'un dans l'autre dans le sens de la direction Z.

Le plot 11 de la partie mâle 7 s'engage alors dans le cadre 26 de la partie femelle 8 en même temps que la structure en forme de pont 30 formant la partie mâle 9 s'engage dans le cadre 14 de la partie femelle 10. Ensuite, les crans 25 se verrouillent dans les crans 12 ce qui empêche le retrait de la partie mâle 7 hors de la partie femelle 8 dans le sens opposé au sens d'insertion selon la direction Z. Simultanément, les crans 18 se verrouillent dans les crans 16 ce qui empêche également le retrait de la partie mâle 9 hors de la partie femelle 10 dans le sens opposé au sens d'insertion selon la direction Z.

Comme visible sur les figures, les ensembles de fermeture 3A et 4A ont une structure évidée résultant du moulage en une seule pièce en matière plastique du lien. Les bordures 31 sont agencées pour longer selon la direction X les évidements présents dans le cadre 14 de la partie femelle 10 ce qui empêche également l'accès depuis l'extérieur aux crans 16 et 18. Ensuite le cadre 14 est agencé pour longer selon la direction X les évidements présents dans le cadre 26 de la partie femelle 8 ce qui empêche l'accès depuis l'extérieur aux crans 25 et 12. Les ensembles de fermeture 3A et 4A sont en fait conformés quand ils sont insérés l'un dans l'autre pour réaliser une bordure périphérique empêchant un accès depuis l'extérieur aux crans de verrouillage des organes de fermeture. En pratique, comme visible sur les figures, les crans flexibles 25 du premier organe de fermeture se déforment selon la direction X tandis que les crans flexibles 16 du second organe de fermeture se déforment selon la direction Y, c'est-à-dire dans une direction perpendiculaire à la direction de déformation des crans du premier organe de fermeture. On a donc en quelque sorte un verrouillage selon deux directions perpendiculaires ce qui confère une protection enveloppante des organes de fermeture 5,6.

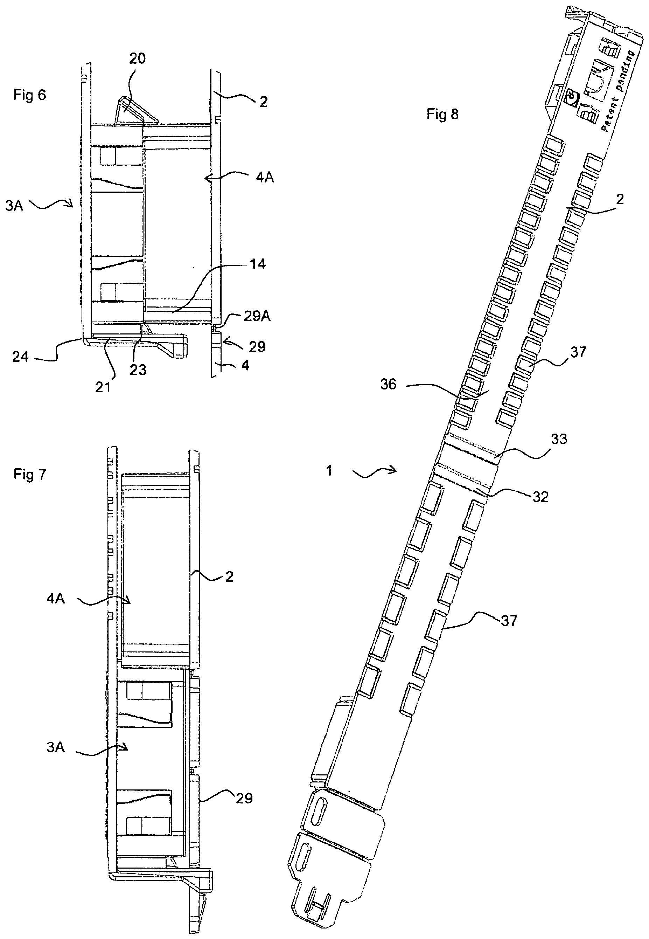

On voit aussi sur la figure 2 que le lien selon l'invention présente du côté de l'ensemble 3A une languette 21 qui s'étend perpendiculairement à la bande 2 et qui saille par rapport à la face supérieure de l'ensemble 3A. Cette languette a une extrémité qui est disposée dans le prolongement de la bande 2 et une partie médiane raccordée à la face extérieure 22 du cadre 14 par une zone de matière sécable 23. La figure 6 représente le lien 1 refermé sur lui-même et illustre comment la languette 21 joue un rôle anti-verrouillage pour éviter un verrouillage intempestif ou involontaire des organes de fermeture quand le lien est refermé sur lui-même. On voit que l'ensemble de fermeture 4A est disposé en retrait du bout de la bande 2 au niveau de l'extrémité 4 laissant ainsi libre une partie d'extrémité 29 de la bande 2. Une zone charnière 29A de la bande est prévue entre l'extrémité 4 de la bande et l'ensemble de fermeture 4A. Lorsque le lien est refermé sur lui-même et que les ensembles de fermeture 3A et 4A sont insérés l'un dans l'autre, la partie de bande 29 vient en superposition sur la languette 21 ce qui empêche l'insertion complète des ensembles de fermeture 3A et 4A. Pour réaliser l'insertion complète des ensembles de fermeture 3A et 4A, il faut libérer la languette 21 du cadre 14 en coupant ou en arrachant la zone de matière sécable 23. La languette 21 peut être alors agencée pour être contrainte élastiquement à s'écarter du cadre 14 par un mouvement de rotation autour de la zone charnière 24, et détachée de la bande 2. Après quoi, l'insertion complète des ensembles de fermeture 3A et 4A peut être réalisée.

Comme visible encore sur la figure 2, sur une autre paroi extérieure 19 du cadre 14, opposée à la paroi 22, saille un crochet 20 agencé pour maintenir ensemble les deux extrémités 3,4 de la bande 2 dans une position de transport qui sera décrite plus en détail ci-dessous. La figure 7 montre le lien 1 dans une position de transport selon laquelle la bande 2 est pliée au niveau de deux zones de charnières 32,33 sensiblement centrées sur la bande 2 et espacées l'une de l'autre dans la direction longitudinale X. Dans sa position de transport, le lien est donc refermé sur lui-même mais les deux ensembles de fermeture 3A et 4A sont placés de façon avec la partie d'extrémité 29 qui vient recouvrir le dessus du premier ensemble de fermeture 3A. Le crochet 20 prévu sur l'ensemble de fermeture 3A est engagé au niveau de l'arceau 30 de l'ensemble de fermeture 4A tandis que la languette 21 vient pénétrer dans la bande 2 au niveau d'une fente 35. Dans cette position, le lien est peut encombrant ce qui facilite sont transport ou son stockage.

La figure 8 montre la face arrière de la bande 2 qui est opposée à la face avant sur laquelle sont disposés les deux organes de fermeture 5,6. Cette face arrière de la bande est pourvue d'un dispositif de marquage ou d'identification 36. Le dispositif de marquage 36 peut être par exemple réalisé par une technique de gravure, par exemple par laser ou par gravure mécanique, ou par une technique d'impression avec tous types d'encres imprimables sur plastique. On peut aussi prévoir un dispositif de marquage 36 constitué par des découpes 37 dans la bande 2, par exemple douze découpes correspondant aux douze mois de l'année et trente-et-une découpent correspondant aux jours d'un mois dans l'année. Le dispositif de marquage 36 peut aussi être réalisé sous une forme électronique (non représenté), par exemple sous la forme d'une puce RFID collée, soudée ou surmoulée dans la bande 2. La puce RFID peut aussi être placée à n'importe quel endroit de la bande y compris au niveau des ensembles de fermeture 3A, 4A.

Le lien 1 selon l'invention peut être réalisé par moulage d'une ou plusieurs matières plastiques, par exemple des polymères thermoplastiques injectables, par exemple par l'intermédiaire de moules d'injection plastique sur des presses à injecter. On pourra utiliser de préférence un polyamide de qualité 6.6. De préférence, le lien 1 est composé d'une seule matière plastique moulée d'un seul tenant. Cette matière plastique est assez résistante pour résister à des efforts de traction mécanique, ce qui permet par exemple de tirer l'animal avec le lien selon l'invention.

## Revendications

1. Lien (1) comprenant une bande (2) ayant deux extrémités (3,4) munies respectivement d'une partie mâle (7) et d'une partie femelle (8) d'un premier organe de fermeture (5) destinées à s'insérer l'une dans l'autre dans une position de verrouillage, selon laquelle le retrait de la partie mâle (7) du premier organe de fermeture (5) hors de la partie femelle (8) de celui-ci est empêché par premiers crans (12, 25) aptes à se verrouiller, pour relier entre elles les deux extrémités (3,4) de la bande afin de refermer le lien, **caractérisé en ce qu'**il comprend en outre un second organe de fermeture (6) avec une partie mâle (9) et une partie femelle (10) destinées à s'insérer l'une dans l'autre dans une position de verrouillage, selon laquelle le retrait de la partie mâle (9) du second organe de fermeture (6) hors de la partie femelle (10) de celui-ci est empêché par seconds crans (16, 18) aptes à se verrouiller, la partie mâle (9) et la partie femelle (10) du second organe de fermeture (6) étant disposées respectivement aux deux extrémités (3,4) de la bande (2) et **en ce que** le second organe de fermeture (6) entoure au moins partiellement le premier organe de fermeture (5).

2. Lien selon la revendication 1, **caractérisé en ce que** les premier et second organes de fermeture (5,6) étant agencés pour se verrouiller simultanément.

3. Lien selon l'une des revendications 1 ou 2, dans lequel le premier organe de fermeture (5) comporte des crans flexibles (25) selon une certaine direction (X) et dans lequel le second organe de fermeture (6) comprend des crans flexibles (16) selon une autre direction (Y) perpendiculaire à ladite certaine direction (X).

4. Lien selon l'une des revendications 1 à 3, dans lequel la partie mâle (7) du premier organe de fermeture (5) avec la partie femelle (10) du second organe de fermeture (6) forment un premier ensemble de fermeture (3A) disposé à une extrémité (3) de la bande (2) et la partie mâle (9) du second organe de fermeture (6) avec la partie femelle (8) du premier organe de fermeture (5) forment un second ensemble de fermeture (4A) disposé à l'autre extrémité (4) de la bande (2).

5. Lien selon l'une des revendications 1 à 4, dans lequel il est prévu à chaque extrémité (3,4) de la bande un moyen (21,29) pour empêcher une insertion complète de la partie mâle dans la partie femelle correspondante des organes de fermeture (5,6) quand le lien (1) est refermé sur lui-même.

6. Lien selon la revendication 5, dans lequel ce moyen comporte une languette (21) qui est reliée à la bande (2) par une zone de matière sécable (23).

7. Lien selon l'une des revendications précédentes, dans lequel il est prévu un moyen (20, 30) pour maintenir le lien (1) refermé sur lui-même selon une position de transport selon laquelle les parties mâle et femelle des organes de fermeture (5,6) ne sont pas insérées l'une dans l'autre.

8. Lien selon l'une des revendications précédentes, comportant en outre un dispositif de marquage du type imprimé sur une face de la bande (2), ou encore soudé ou surmoulé dans la bande (2).

9. Lien selon l'une des revendications précédentes, dans lequel la bande (2) avec les organes de fermetures (5,6) sont en matière plastique et sont moulés d'une seule pièce.

## Patentansprüche

1. Band (1), einen Streifen (2) mit zwei Enden (3, 4) umfassend, die jeweils mit einem Steckteil (7) beziehungsweise einem Kastenteil (8) eines ersten Verschlussorgans (5) versehen sind und dazu bestimmt sind, ineinandergeschoben zu werden in eine Verriegelungsstellung, in der das Herausziehen des Steckteils (7) des ersten Verschlussorgans (5) aus dessen Kastenteil (8) verhindert wird durch erste Rasten bzw. Zacken (12, 25), fähig sich zu verriegeln, um die beiden Enden (3, 4) des Streifens miteinander zu verbinden, **dadurch gekennzeichnet, dass** es außerdem ein zweites Verschlussorgan (6) umfasst, mit einem Steckteil (9) und einem Kastenteil (10), dazu bestimmt, ineinandergeschoben zu werden in eine Verriegelungsstellung, in der das Herausziehen des Steckteils (9) des zweiten Verschlussorgans (6) aus dessen Kastenteil (10) verhindert wird durch zweite Rasten bzw. Zacken (16, 18), fähig sich zu verriegeln, wobei der Steckteil (9) und der Kastenteil (10) des zweiten Verschlussorgans (6) jeweils an den beiden Enden (3, 4) des Streifens (2) angeordnet sind, und dadurch, dass das zweite Verschlussorgan (6) das erste Verschlussorgan (5) wenigstens partiell umgibt.

2. Band nach Anspruch 1, **dadurch gekennzeichnet , dass** das erste und das zweite Verschlussorgan (5, 6) so eingerichtet sind, dass sie sich simultan verriegeln.

3. Band nach einem der Ansprüche 1 oder 2, bei dem das erste Verschlussorgan (5) in einer bestimmten Richtung (Y) flexible Rasten bzw. Zacken (25) umfasst, und bei dem das zweite Verschlussorgan (6) in einer anderen, zur genannten ersten Richtung (X) senkrechten Richtung (Y) flexible Rasten bzw. Zacken (16) umfasst.

4. Band nach einem der Ansprüche 1 bis 3, bei dem der Steckteil (7) des ersten Verschlussorgans (5) mit dem Kastenteil (10) des zweiten Verschlussorgans (6) eine erste Verschlusseinheit (3A) bildet, angeordnet an einem Ende (3) des Streifens (2), und der Steckteil (9) des zweiten Verschlussorgans (6) mit dem Kastenteil (8) des ersten Verschlussorgans (5) eine zweite Verschlusseinheit (4A) bildet, angeordnet am anderen Ende (4) des Streifens (2).

5. Band nach einem der Ansprüche 1 bis 4, bei dem an jedem Ende (3, 4) des Streifens eine Einrichtung (21, 29) vorgesehen ist, um eine komplette Einfügung des Steckteils in den entsprechenden Kastenteil der Verschlussorgane (5, 6) zu verhindern, wenn das Band (1) in sich selbst geschlossen ist.

6. Band nach Anspruch 5, bei dem diese Einrichtung eine Zunge (21) umfasst, die mit dem Streifen (2) durch eine Zone aus teilbarem Material (23) verbunden ist.

7. Band nach einem der vorhergehenden Ansprüche, bei dem eine Einrichtung (20, 30) vorgesehen ist, um eine Transportstellung des in sich geschlossene Bandes (1) aufrechtzuerhalten, in der der Steckteil und der Kastenteil der Verschlussorgane (5, 6) nicht ineinander eingefügt sind.

8. Band nach einem der vorhergehenden Ansprüche, mit außerdem auf einer Seite des Streifens (2) einem Markierungsmittel der aufgedruckten, aufgeschweißten oder aufgegossen bzw. aufgespritzten Art.

9. Band nach einem der vorhergehenden Ansprüche, bei dem der Streifen (2) und die Verschlussorgane (5, 6) aus Kunststoff sind und aus einem Stück gegossen sind.

## Claims

1. Strap (1) comprising a strip (2) having two ends (3, 4) each provided with a male part (7) and a female part (8) of a first closure member (5) destined to be inserted into one another in a locking position, in which the removal of the male part (7) of the first closure member (5) from the female part (8) thereof is prevented by first notches (12, 25) able to interlock, for connecting both ends (3, 4) of the strip to one another in order to close the strap, **characterized in that** it further comprises a second closure member (6) with a male part (9) and a female part (10) destined to be inserted into one another in a locking position, in which the removal of the male part (9) of the second closure member (6) from the female part (10) thereof is prevented by second notches (16, 18) able to interlock, the male part (9) and the female part (10) of the second closure member (6) being respectively disposed at both ends (3, 4) of the strip (2), and **in that** the second closure member (6) at least partially surrounds the first closure member (5).

2. Strap according to claim 1, **characterized in that** the first and second closure members (5, 6) are arranged to lock simultaneously.

3. Strap according to one of claims 1 or 2, wherein the first closure member (5) comprises flexible notches (25) in a certain direction (X) and wherein the second closure member (6) comprises flexible notches (16) in another direction (Y) perpendicular to said certain direction (X).

4. Strap according to one of claims 1 to 3, wherein the male part (7) of the first closure member (5) and the female part (10) of the second closure member (6) form a first closure assembly (3A) disposed at one end (3) of the strip (2), and the male part (9) of the second closure member (6) and the female part (8) of the first closure member (5) form a second closure assembly (4A) disposed at the other end (4) of the strip (2).

5. Strap according to one of claims 1 to 4, wherein each end (3, 4) of the strip is provided with means (21, 29) for preventing a complete insertion of the male part in the corresponding female part of the closure members (5, 6) when the strap (1) is closed on itself.

6. Strap according to claim 5, wherein said means comprises a tab (21) which is connected to the strip (2) by an area of cleavable material (23).

7. Strap according to one of the preceding claims, wherein means (20, 30) are provided for maintaining the strap (1) closed on itself in a transport position in which the male and female parts of the closure members (5, 6) are not inserted into one another.

8. Strap according to one of the preceding claims, further comprising a marking device of the type printed on one side of the strip (2), or welded or over-molded in the strip (2).

9. Strap according to one of the preceding claims, wherein the strip (2) and the closure members (5, 6) are made of plastic material and are molded in one piece.
